(19) Europäisches Patentamt / European Patent Office / Office européen des brevets

(11) **EP 2 144 048 A2**

(12) **EUROPEAN PATENT APPLICATION**

(43) Date of publication:
**13.01.2010 Bulletin 2010/02**

(51) Int Cl.:
***G01N 17/00*** (2006.01)   ***G01N 21/25*** (2006.01)

(21) Application number: **09164820.4**

(22) Date of filing: **07.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.07.2008 US 171998**

(71) Applicant: **Atlas Material Testing Technology, Llc.**
**Chicago,**
**Illinois 60613 (US)**

(72) Inventors:
• **Scott, Kurt P.**
  **Chicago, IL 60615 (US)**
• **Waas, Christopher**
  **North Riverside, IL 60546 (US)**

(74) Representative: **Read, David Graham**
**W. P. Thompson & Co.**
**Coopers Building**
**Church Street**
**Liverpool L1 3AB (GB)**

(54) **Weathering test apparatus with real-time color measurement**

(57)   What is disclosed is a weathering test apparatus with an In situ, Real-time Color Measurement System (IRCMS) with an input optic connected to a light pipe placed in the chamber between a light source and a test specimen in turn connected to a color measuring sensor and the associated processing and storage system to determine the color of a specimen in a continuous fashion within the enclosure of the weathering device. The color obtained is then compared a stored value or reference to determine the color evolution over time and can also be compared with the Standard Reference Materials (SRM) to determine when standardized testing has achieved acceptable color change values. In another embodiment, the input optic is offset from a line between the specimen and the light source to limit interference of shading created by the optic, and in another embodiment, several input optics are used in tandem to measure the color of different specimens located at different angular orientations on the rotating rack in the chamber, In yet another embodiment, a second optic is used to take a full-spectrum measurement of the irradiant light source used in the color calculation under the CIE standard.

## Description

### FIELD OF THE DISCLOSURE

This disclosure relates generally to a weathering test apparatus, and in particular, to the *in situ* real-time color measurement of test specimens placed within a test chamber of a weathering test apparatus.

### BACKGROUND

Indoor accelerated weathering test apparatus are known to test the accelerated aging characteristics of painted surfaces, fabrics, plastic sheeting, and other materials. Such testing is accomplished by exposing the materials to be tested to high-intensity radiation from an artificial light source, such as a xenon source that approximates sunlight under conditions of controlled and sometimes high temperature and/or humidity. Xenon sources are often associated with Class D illuminants with distributions that closely resemble the radiation emitted by a black-body at a temperature of 6,500 Kelvin. These sources are classified as D65 for the purpose of color spectrum analysis.

In a natural outdoor environment, heat, light, and moisture combine to synergistically cause optical, mechanical, and chemical changes in products exposed to such outdoor weathering conditions. Generally, the test apparatus of the present invention and those of the prior art can be used to obtain such weathering data on an accelerated time basis to permit product manufacturers to gain information as to how their products will react to weathering conditions over months or years. For many products, such as paint or colored plastics, the changes to color over time may be used to evaluate the durability of the specimen as it evolves away from its original appearance.

Typically, an accelerated weathering test apparatus uses air that circulates through the system to control the temperature of specimens being tested so that specimens are neither underheated nor overheated by heat and/or radiation sources that may be present, typically a high-intensity plasma lamp such as a xenon lamp. It is desirable for specimens being tested to be exposed to precisely predetermined conditions of light to ensure accurate comparison between various test runs and so that the weathering conditions provided by the test apparatus can be accurately predetermined and thus recreated when desired for comparison of various specimens over the years.

In known accelerated weathering test apparatuses, a rotatable rack for carrying the specimens to be tested surrounds a light source, often a xenon lamp, which emits irradiation having a substantial ultraviolet component. These lights may be considered class D illuminants where the energy distribution closely corresponds to the radiation emitted by a so-called black-body. As the temperature of the black body is increased, a notable shift occurs in the emitted radiation to shorter wavelengths. Xenon lamps may be class D65 illuminants with distributions that resemble a black-body at 6,500 Kelvin in emission temperature. D65 illuminants are often used to mimic daylight solar distribution in the Northern Hemisphere. D55 illuminants are also important in other parts of the world.

The rack is typically rotated at about one revolution per minute to avoid any systematic differences of positioning of the specimens in the system. Also, the typical level of irradiation imposed on the specimens is approximately one SUN, which is inferred in many standards, such as The Society of Automotive Engineers weathering testing method, as 0.55 watt per square meter, per nanometer, at 340 nanometers ultraviolet radiation. Energy sources, such as a xenon light, are described by a full-spectrum distribution and can also be described in terms of how much energy is emitted inside the visible range, a part of which can be perceived by the human eye generally considered to be from 380 nanometers to 780 nanometers, which is the range of absorption of the macula pigment found in the human eye.

Specimens are made of materials that appear colored because of the absorption and/or scattering properties of the different chemical elements, such as the pigments found in them. If a substance absorbs energy at the yellow wavelengths, then the surface appears blue. Paint pigments are known to scatter light more efficiently in one part of the spectrum and are thus used to color materials. As these pigments degrade over time, the color of the material may change as an indication of chemical and mechanical degradations of the material.

While many different methods and standards can be used to measure color, one of the standard used is the CIE standard, which is short for Commission Internationale de l'Eclairage and translates from the original French to International Commission on Energy. This standard, established in 1931, is based on the creation of three imaginary primaries: X, Y, and Z. Each primary corresponds to a standardized function over the visible light spectrum. Under this standard, the equi-energy stimulus of all three primaries is the same (X = Y = Z). Under the standard,

$$X = 1/k \ \Sigma \ R(\lambda)*E(\lambda)*x(\lambda)$$

$$Y = 1/k \ \Sigma \ R(\lambda)*E(\lambda)*y(\lambda)$$

$$Z = 1/k \ \Sigma \ R(\lambda)^*E(\lambda)^*z(\lambda)$$

Where $k = \Sigma E(\lambda)^*y(\lambda.)$, and $x(\lambda)$, $y(\lambda)$, and $z(\lambda)$ are standard observer functions at a wavelength $\lambda$, $R(\lambda)$ is the reflectance value at the same wavelength. Under this standard, relative spectral energy distributions for the illuminant can be used. Generally, the XYZ tristimulus value is given in a three-dimensional color space expressed in terms of chromaticity coordinates on a chromaticity diagram. Under the 1931 CIE standard, a visual angle of 2 degrees was used (X, Y, Z) with a spectrum of 31 measures over the wavelength spectrum (400 nm, 410nm, .... 700nm). Under the new 1964 CIE standard, a 10-degree visual angle is taken $(X_{10}, Y_{10}, Z_{10})$ over the same spectrum variability.

Recently, the CIE XYZ coordinates are transformed into a two-dimensional plot by crating a set of transformed coordinates using the x + y + z=1 system where x = X / (X + Y + Z), y = Y / (X + Y + Z), and z = Z / (X + Y + Z). Because of problems in this space associated with the merger of colors with different illumination values, the CIE L*a*b* color space was devised, or the CIE 76. Under this new standard, L* represents the lightness (0 is black and 100 is white), a* represents the redness-greeness, and b* represents the yellowness-blueness. The following transformations are used to calculate these values:

$$L^* = 116(Y/Y_n)^{1/3} - 16$$

$$a^* = 500[(X/X_n)^{1/3} - (Y/Y_n)^{1/3}]$$

$$b^* = 200[(Y/Y_n)^{1/3} - (Z/Z_n)^{1/3}]$$

where $X_n$, $Y_n$, and $Z_n$ are the values of X, Y, and Z for the illuminant used for the calculation of the X, Y, and Z of the specimen. One other important measurement parameter under CIE 76 is the Euclidean distance ($\Delta E$), where $\Delta E = [(\Delta L^*)^2 + (\Delta a^*)^2 + (\Delta b^*)^2]^{1/2}$. The Euclidian distance is the distance between the two points in the three-dimensional space created by the CIE L*a*b* base.

is it a test apparatus of measuring the color of the specimen without removal of each specimen for bench-top measurement of color, (which may be used in conjunction with a weathering test apparatus capable of using *in situ* light source measurements) to measure the color evolution of specimens based on, for example, the monitoring of the Euclidean distance based on a partial or complete spectral distribution of the illuminant.

## SUMMARY

What is disclosed is a weathering test apparatus with an In situ, Real-time Color Measurement System (IRCMS) with an input optic connected to a light pipe placed in the chamber between a light source and a test specimen, which is in turn connected to a color measuring sensor and the associated processing and storage system, to determine the color of a specimen in a continuous fashion within the enclosure of the weathering device. The color obtained is then compared to a stored value or reference to determine the color evolution over time. Standard Reference Materials (SRM) can also be similarly measured to determine when standardized testing of Standard Weathering Reference Materials (SWRM) has achieved target color change values. In another embodiment, the input optic is offset from a line between the specimen and the light source to limit interference of shading created by the optic, and in another embodiment, several input optics are used in tandem to measure the color of different specimens located at different angular orientations on the rotating rack in the chamber. In yet another embodiment, a second optic is used to measure a full-spectrum measurement of the irradiant light source used in the color calculation under the CIE standard, and to expose the samples being weather tested.

## BRIEF DESCRIPTION OF THE DRAWINGS

Certain embodiments are shown in the drawings. However, it is understood that the present disclosure is not limited to the arrangements and instrumentality shown in thy attached drawing, wherein:

FIG. 1 is a perspective view of the weathering test apparatus with an enclosure without access doors with an input optic located between the light source and the specimen according to an embodiment of the present disclosure.

FIG. 2 is a diagram of a method of determining the color change of a specimen according to an embodiment from the prior art.

FIG. 3 is a front, close-up view of the enclosure of the weathering test apparatus without access doors as shown in FIG. 1 according to an embodiment of the present disclosure.

FIG. 4 is a functional diagram of the accelerated weathering test apparatus with a first and a second light optic and the light analysis control system according to an embodiment of the present disclosure.

FIG. 5 is a functional diagram of the accelerated weathering test apparatus with a first light optic and the light analysis control system according to an embodiment of the present disclosure.

FIG. 6 is a diagram of a method of determining the color change of a specimen according to an embodiment of the present disclosure.

FIG. 7 is a front, close-up view of the enclosure of the weathering test apparatus without access doors and with a first optic according to an embodiment of the present disclosure.

FIG. 8 is a top view of the enclosure of the weathering test apparatus showing an inline input optic as A and an offset input optic as B accruing to alternate embodiments.

**DETAILED DESCRIPTION**

The present invention is not limited to the particular details of the apparatus depictured and other modifications and applications may be contemplated. Further changes may be made in the apparatus described herein without departing from the true spirit of the scope of the disclosure. It is intended, therefore, that the subject matter of the above depictions should be interpreted as illustrative, not in a limiting sense.

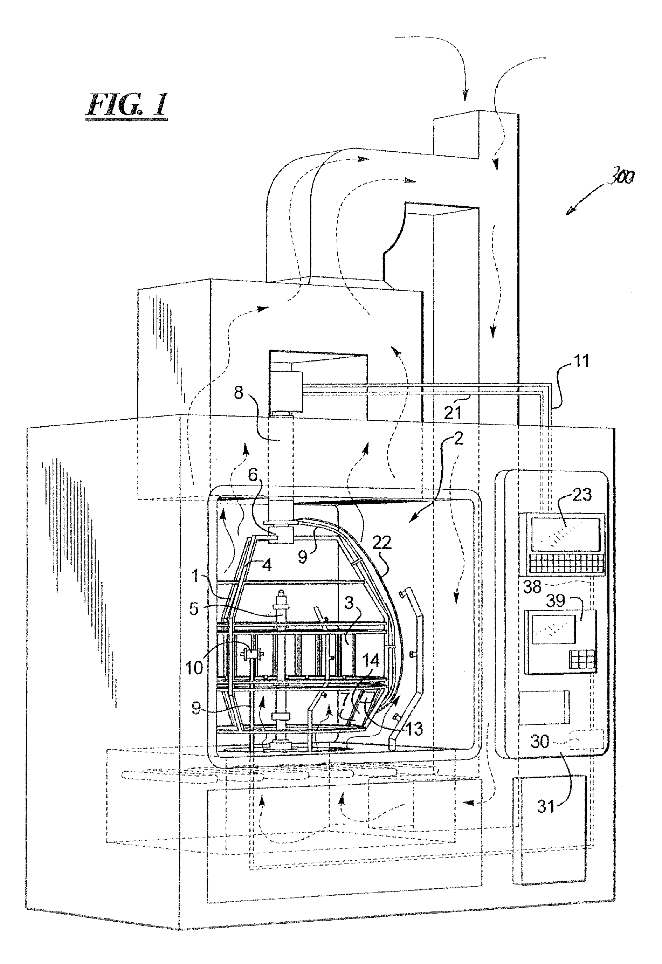

FIG. 1 shows the weathering test apparatus 300 according to a possible embodiment of the present invention. Speaking generally, air illustrated by wavy lines is circulated down and through a series of heating or cooling elements before it is introduced in an enclosure 2 where it contacts a series of specimens 3 attached to a rotating rack 1. Once the specimens 3 are heated or cooled by air convection, the air is circulated out of the enclosure through a series of openings where the air can be channeled and controlled. An access door (not shown) is attached to the enclosure 2 for access to the interior volume of the enclosure 2.

A light source 5, generally a xenon arc lamp or any other type of lamp, is used as a source to induce photochemical degradation as well as an irradiation heat source directed to a surface of the specimens 3 such as metal halide, fluorescent, carbon arc and the like. The light source 5 is calibrated using a power output and a power distribution spectrum to mimic a specific light and heat source under specific conditions (e.g., a D65-type xenon lamp can be used to approximate the sun in the Northern Hemisphere). In some embodiments, the light source 5 heats the specimens 3 through irradiation while the air heats the specimens via convection. Both energy sources may be calibrated independently to approximate most climates found on the Earth.

A weathering test apparatus is often used to compress slowly occurring natural weathering conditions into an aging process with shorter durations where light, heat, and humidity conditions are varied according to precise algorithms. Because simulated weathering relies on rapidly changing parameters, the input parameters and the measured values within the enclosure 2 must be precisely controlled. Other auxiliary controls, such as humidity control and rain control, may be introduced within the enclosure 2 to better simulate additional weathering conditions. The surface temperature of the specimens 3 can be measured by contact sensors or remote sensors. The intensity of the light source 5 can be measured using a full-spectrum monitoring system; a fixed, calibrated, stored value; the power output of the source 5; or a sensor placed on the rack 1 in lieu of a specimens 3.

Due to the rack 1 rotation within the enclosure 2, any sensor placed on the rack is also in a movable relationship with the enclosure 2. Sensory measure from the rack can take place by using a sensor capable of recording data, a sensor equipped with wireless communication, or a sensor connected to a light pipe or electrical connector connected via a rotary joint 6 to a command structure as shown in FIG. 1. In other embodiments, the sensor is fixed in the enclosure 2 by the light pipe 9 attached to the input optic 10 and does not rotate with the rack 1. Because this disclosure relates to the measure of color of specimens within enclosure 2, one of ordinary skill in the art recognizes that the subject matter applies with equal force to any and all of the above-described climate control mechanisms and sensory measurement means associated with weathering test apparatuses. What is contemplated is the use of the described technology in conjunction with any and all weathering testing equipment.

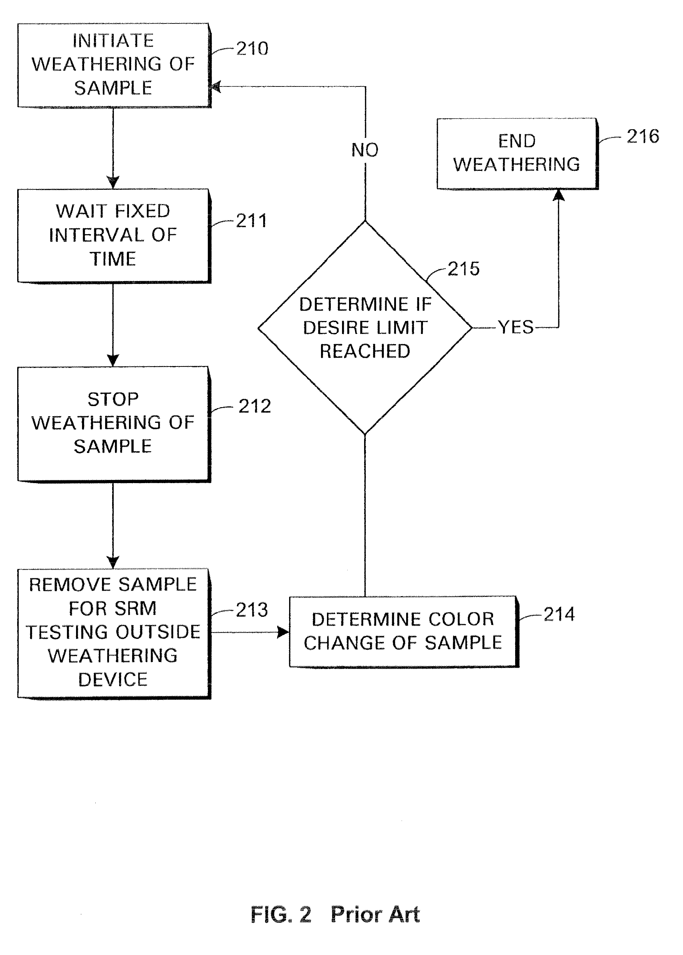

What is known in the art as a method of determining the color change of specimens 3 mounted on a rack 1 within the enclosure 2 in a weathering test apparatus 300 as shown in FIG. 2. Once weathering of a specimen is initiated 210, operators of test apparatuses wait for a fixed period of time 211 or a predetermined period of time based either on experience with the type of specimen being weathered or based on a fixed period of time associated with protocol. The weathering is then stopped 212 and the specimen is removed for testing for color fading or SRM testing outside of the weathering device 213. The measured color is then compared with the initial color of the specimen to determine the degree of color change 214. If the desired color variation is reached 215, weathering is terminated 216. If the desired color variation remains inferior to the variation desired, then the specimen is reinserted in the enclosure 2 for a new round of weathering 210. The color measurement can be conducted using any portable device for measure of the specimen 3 on the rotating rack 1 after the door is opened for access to the mounted specimen or using a tabletop color control and measuring device where the specimen 3 is removed from the rack 1 and then replaced after control. These measurements only provide information at discreet time segments and no continuous data or *in situ*, real-time measurement. Therefore, corrections must be introduced associated with these interruptions in the weathering process.

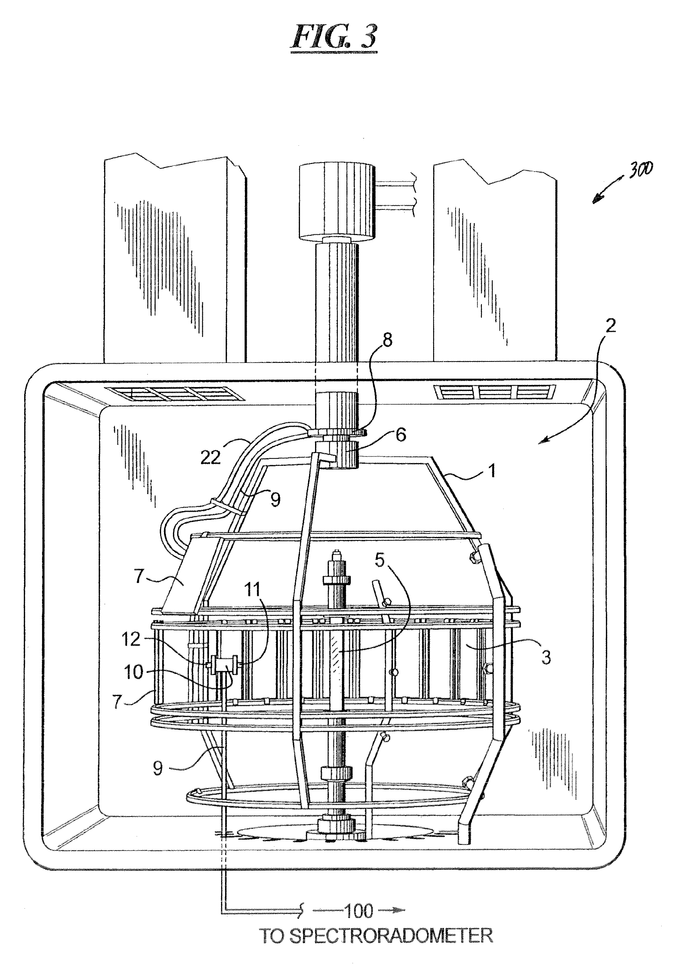

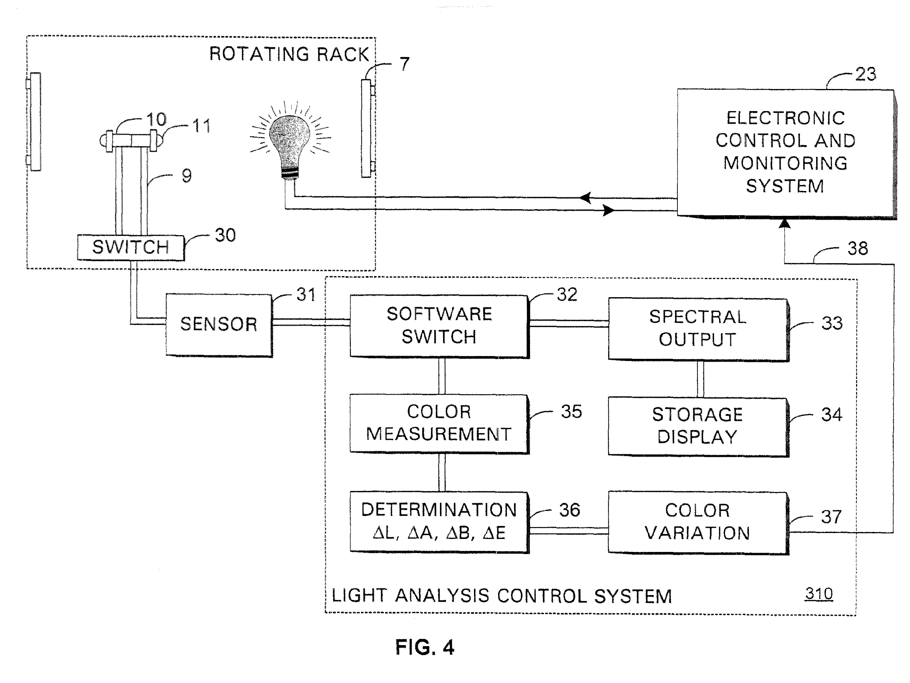

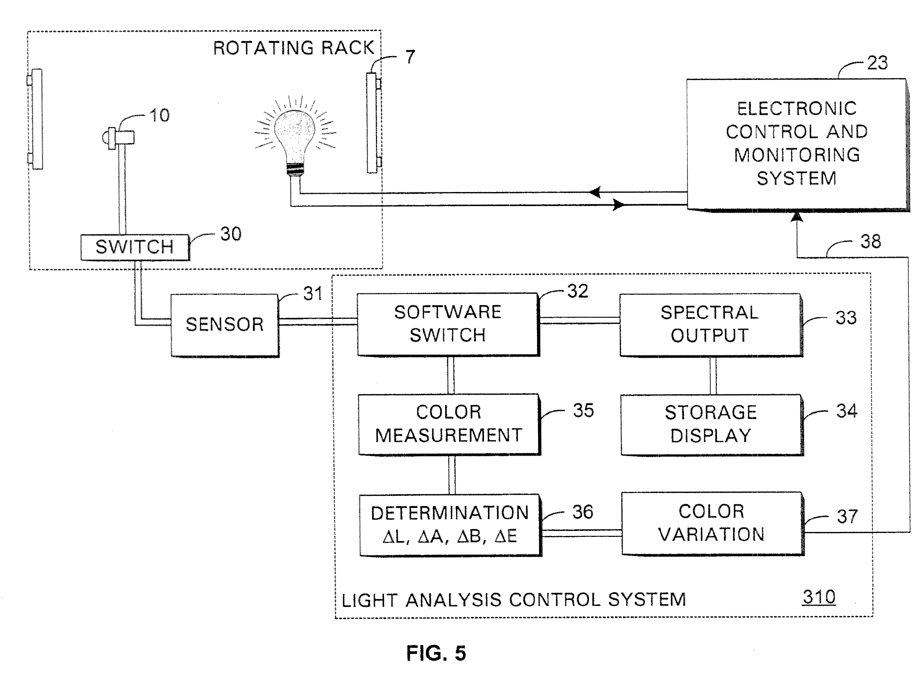

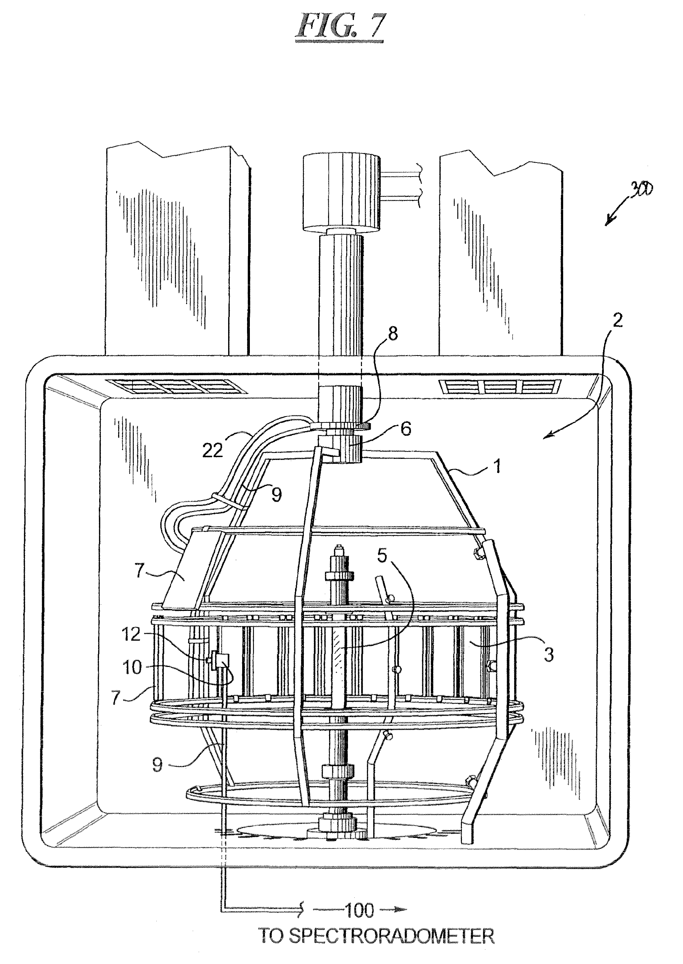

FIG. 7 is a front, close-up view of the enclosure of the weathering test apparatus without access doors as shown in FIG. 1 with a single input optic as shown in the functional diagram of FIG. 5. FIG. 3 is a front, close-up view of the enclosure of the weathering test apparatus without access doors as shown in FIG. 1 with two input optics as shown in the functional diagram of FIG. 4.

In one embodiment shown in FIG. 7, an accelerated weathering apparatus 300 includes an enclosure 2 with an access door to a test chamber defined within the enclosure, a rotating specimen rack or a rack 1 for holding at least a test specimen 3 within the enclosure 2, a light source 5 disposed within the test chamber for illuminating the test specimen 3, a first input optic 10 disposed within the test chamber for measuring spectral reflectance of the light source 5 on the test specimen 3, the first input optic 10 connected by a light pipe 9 to a color measuring sensor 31 as shown in FIG. 5, and to a light analysis control system 310 for the *in situ,* real-time determination of color evolution of the test specimen 3.

Color measurement is conducted using the reflectance of the light source 5 over a specimen 3. What is understood as reflectance is the light reflected by the surface of the specimen 3 when mounted on the rack 1 within the enclosure 2. A reflectance spectrophotometer measures the proportional amount of light reflected as reflectance as a function of wavelength that enters the input optic 10 as a reflectance spectrum. In one preferred embodiment, a color-matching software can be used, which may include a sensor 31, a software switch 32 connected to a switch 30 for selecting optical input, a color measurement algorithm 35, and a software determination of different parameter 36 such as X, Y, Z, x, y, z, L*, a*, b*, $\Delta$L, $\Delta$a*, $\Delta$b*, and $\Delta$E based on the color measurement 35 as illustrated schematically in FIG. 4. In one embodiment, the spectral output of the color measured 33 can be displayed on a screen 34 using a color display interface before it is stored for further processing.

In one embodiment, once the different values X, Y, Z, x, y, and z are determined and calculated using the different values associated with each selected segment of the wavelength spectrum, the values L*, a*, and b* are determined. An interface is then used to compare the newly obtained color with the initial color of the specimen and the target color of the specimen by calculating variation values such as $\Delta$L, $\Delta$a*, $\Delta$b*, and $\Delta$E. What is contemplated is the use of any known graphical interface and spreadsheet-type interface to display and process the information obtained.

What is also disclosed and contemplated is the use additional external operational measures to ensure that the reflectance measurement by the first input optic 10 is conducted adequately. For example, specimens with different surface finishes can reflect light in different quantity at different angles, and this may result in turn in a large variation in overall reflectance as the specimen rotates on the rack 1. A red paint with a glossy finish can appear black at a slight angle. Other parameters such as the presence of water pearls, dust, or fog in the air can result in reflectance changes. Also, as the specimen surface finish changes with weathering, it may become more rough, creating an impression that the color has changed at certain viewing angles when in fact the color has not changed.

In addition to weathering environmental control, such as the use of drying cycles, a measure coordinated with the angular position of the specimen 3, and a color measurement at certain precise moment in the weathering cycles, what is contemplated is the use of calculation techniques and calculation algorithms to improve the *in situ,* real-time color measurement. For example, measurement can be conducted at a plurality of angles and recorded at peak values, a plurality of measures can be conducted and averaged, a running average value can be used to offset real-time measurement, etc.

In another embodiment shown in FIGS. 3-4, a second input optic 11 is disposed within the test chamber for measuring the light spectral distribution of the light source 5. A measure of spectral distribution of a light source 5 is disclosed in U.S. Patent No. 7,038,196, fully incorporated herein by reference. The use of a second input optic 11 allows for an *in situ,* real-time measurement of the light source 5, which may be calibrated as the illuminant for the calculation of the reflectance. Since discreet segments of the 380 nm to 700 nm visible light spectrum are used for the calculation of the color, each of these segments can be associated with their counterparts in the illuminant spectrum to obtain better results.

In one embodiment, the first input optic 10 is connected to the color measuring sensor through a switching mechanism 30. It will be recognized that any suitable switching mechanism may be used such as an optical switch or optical cross-connect, or other suitable device that handles optics and has two inputs, one output and a switch to selectively vary or cycle the two inputs that are directed to the one output. The color measuring sensor 31 in one embodiment is a miniature charged coupled device (CCD) in the form of an array. In another embodiment, the color measuring sensor 31 is a nonscanning spectroradiometer. While two different types of sensors 31 are described, it is contemplated that any known and portable color detecting sensor may be used, such as a charge coupled device, a silicon array detector, complementary metal-oxide-semiconductor device, an active pixel sensor, a bayer sensor, a foveon X3 sensor, a diode array detector or a photo multiplier tube.

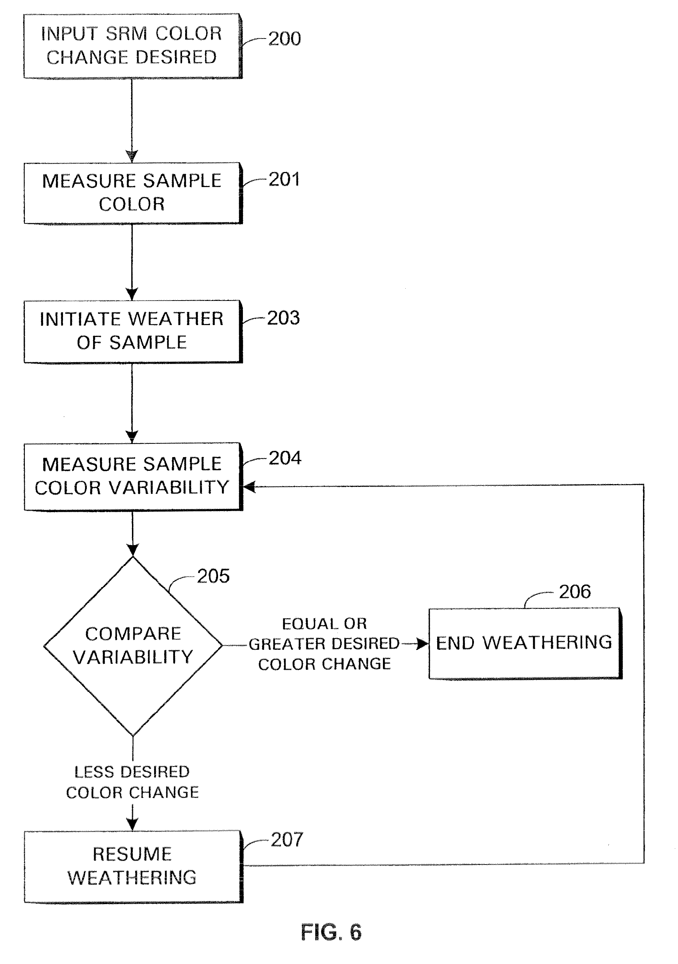

FIG. 6 shows how weathering can be conducted with an *in situ,* real-time color measurement device. The light analysis control system 310 can end weathering 26 based on the determination of a color variation of the test specimen 205. In a first step, the color change of the standard reference material (SRM) can be entered as control data into the light analysis control system 310. The color of the specimen 3 is then measured 201 using the above-described apparatus and weathering of the specimen is initiated 203. In a subsequent step, in real time, either continuously or at discrete intervals of time, the variability of the color is measured 204 and compared 205 with the initial measured value ($\Delta$E). If the variation is equal or greater than the value, then weathering is ended 206. If the color change remains less than the desired color change, weathering is resumed 207 until the color variability is measured again 204.

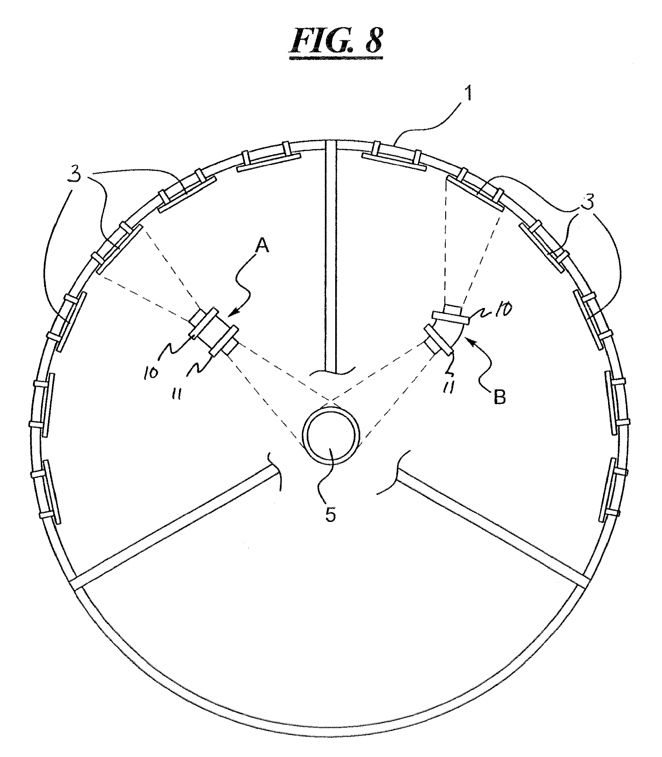

FIG. 8 shows different possible configurations of specimens 3 mounted in different angular orientations on the rack 1. What is shown as configuration A is a possible embodiment where the first and second input optics 10, 11 are aligned between the light source 5 and the test specimens 3. The advantage of this configuration is to provide a frontal color measurement of the specimen 3, but the disadvantage is to create some level of shading caused by the input optics 10, 11. In what is shown as configuration B, the first optic 10 measures the spectral reflectance of the test specimen, at angular orientation from a normal plane of the test specimen 3.

In yet another method of determining the color of specimens in an accelerated weathering apparatus, the method comprises the steps of placing a first input optic 10 in a test chamber 2 having a rotating specimen holder 1 holding at least a test specimen 3, identifying the test specimen 3, measuring a spectral reflectance of a light source 5 in the test chamber 2 on the test specimen 3 using the first input optic 10, calculating a set of CIE tristimulus values for the test specimen 3 with the measured spectral reflectance, and storing the set of CIE tristimulus value in a database along with a timestamp. In another embodiment, the method further comprises the steps of placing a second input optic 11 in the test chamber 2 for measuring the light spectral distribution of the light source 5 and storing the spectral distribution of the light 5 in the database along with the timestamp. A timestamp is any type of information or storage mechanism associated with the measure that allows for the reconstruction of a stream of data in a temporal flow. For example, a time value can be stored alongside the color measurement data, but the use of a time increment linking successive stored values is also contemplated. What is also disclosed in the field of weathering is the use of fading (ΔL) instead of color evolution (ΔE) as a possible tool to evaluate the change of a specimen when what is to be observed is the fading and not tha change in color of a specimen. What is also contemplated is the use of other standards or color measurement technologies and interfaces along with the technology.

Finally, what is also contemplated but not shown is the use of an ambient sensor of detecting background luminosity associated with second-hand reflection of light within the enclosure 2 on the specimen 3 to further correct the measurement of color obtained. In a closed enclosure 2 where walls have a reflectance and the light source 5 is not specifically directed only on the specimen 3 but within the totality of the enclosure 2 surface, a large part of the illumination from the light source 5 is made of background luminosity.

While specific embodiments of the invention are illustrated in the drawings and described in the specification, the invention is not limited to the exact construction shown and described. Variations in the construction and arrangement of parts and components are possible without departing from the scope of the invention as defined in the appended claims.

## Claims

1. An accelerated weathering test apparatus, comprising:

    an enclosure with an access door to a test chamber defined within the enclosure;
    a rotating specimen rack for holding at least a test specimen within the enclosure;
    a light source disposed within the test chamber for illuminating the test specimen;
    a first input optic disposed within the test chamber for measuring spectral reflectance of the light source on the test specimen, the first input optic connected by a light pipe to a color measuring sensor and to a light analysis control system for the in situ, real-time determination of color evolution of the test specimen.

2. The accelerated weathering test apparatus of claim 1, further comprising a second input optic disposed within the test chamber for measuring the spectral distribution of the light source.

3. The accelerated weathering test apparatus of claim 1 or 2, wherein the light source is selected from a group consisting of a xenon arc lamp, a metal halide lamp, a fluorescent lamp and a carbon arc lamp.

4. The accelerated weathering test apparatus of claim 1, 2 or 3 wherein the first input optic is connected to the color measuring sensor through a switching mechanism.

5. The accelerated weathering test apparatus of any one or more of the preceding claims, wherein the color measuring is selected from a group consisting of a charge coupled device, charge coupled array, a silicon array detector, complementary metal-oxide-semiconductor device, active pixel sensor, bayer sensor, foveon X3 sensor, diode array detector, a photo-multiplier tube and a nonscanning spectroradiometer.

6. The accelerated weathering test apparatus of any one or more of the preceding claims, wherein the light analysis control system includes a software switch connected to a spectral output and a color measurement software for calculating real-time color differences.

7. The accelerated weathering test apparatus of any one or more of the preceding claims, wherein the light analysis control system can end weathering based on the determination of a color variation of the test specimen.

8. The accelerated weathering test apparatus of any one or more of claims 2 to 7, wherein the first optic and the second optic are aligned between the light source and the test specimen.

9. The accelerated weathering test apparatus of any one or more of claims 2 to 7, wherein the first optic measures the spectral reflectance of the test specimen at an angular orientation from a normal plane of the test specimen.

10. A method of determining the color of specimens in an accelerated weathering test apparatus, the method comprising the steps of:

> placing a first input optic in a test chamber having a rotating specimen rack holding at least a test specimen;
> identifying the test specimen;
> measuring a spectral reflectance of a light source in the test chamber on the test specimen using the first input optic;
> calculating a set of CIP tristimulus values for the test specimen with the measured spectral reflectance; and
> storing the set of CIP tristimulus value in a database along with a timestamp.

11. The method of determining the color of specimens in an accelerated weathering test apparatus of claim 10, the method further comprising the steps of placing a second input optic in the test chamber for measuring the spectral distribution of the light source, and storing the spectral distribution of the light in the database along with the timestamp.

12. The method of determining the color of specimens in an accelerated weathering test apparatus of claim 10 or 11, the method further comprising the steps of creating a spectral output using a software application, displaying and storing of the information as a spectral distribution in the database.

13. The method of determining the color of specimens in an accelerated weathering test apparatus of any one or more of claims 10 to 12, the method further comprising the steps of comparing the set of CIP tristimulus values with a set of initial stored CIP tristimulus value to determine a real-time color difference, comparing the real-time color difference with a stored value of maximum color variability for the test specimen, and ending weathering if the real-time color difference exceeds or equals the stored value of maximum color variability.

*FIG. 1*

INITIATE WEATHERING OF SAMPLE —210

WAIT FIXED INTERVAL OF TIME —211

STOP WEATHERING OF SAMPLE —212

REMOVE SAMPLE FOR SRM TESTING OUTSIDE WEATHERING DEVICE —213

DETERMINE COLOR CHANGE OF SAMPLE —214

DETERMINE IF DESIRE LIMIT REACHED —215

NO

YES

END WEATHERING —216

**FIG. 2 Prior Art**

# FIG. 3

TO SPECTRORADOMETER

**FIG. 4**

FIG. 5

EP 2 144 048 A2

INPUT SRM COLOR
CHANGE DESIRED — 200

↓

MEASURE SAMPLE
COLOR — 201

↓

INITIATE WEATHER
OF SAMPLE — 203

↓

MEASURE SAMPLE
COLOR VARIABILITY — 204

↓

COMPARE
VARIABILITY — 205

EQUAL OR
GREATER DESIRED → END WEATHERING — 206
COLOR CHANGE

LESS DESIRED
COLOR CHANGE

↓

RESUME
WEATHERING — 207

FIG. 6

# FIG. 7

100
TO SPECTRORADOMETER

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7038196 B